Europäisches Patentamt

European Patent Office

Office européen des brevets

(19)

(11) Veröffentlichungsnummer : **0 047 385**
**B1**

(12) **EUROPÄISCHE PATENTSCHRIFT**

(45) Veröffentlichungstag der Patentschrift :
**09.01.85**

(21) Anmeldenummer : **81105870.0**

(22) Anmeldetag : **24.07.81**

(51) Int. Cl.⁴ : **B 60 B 17/00**

(54) **Schwingungsgedämpftes Schienenrad.**

(30) Priorität : 04.09.80 DE 3033246

(43) Veröffentlichungstag der Anmeldung :
**17.03.82 Patentblatt 82/11**

(45) Bekanntmachung des Hinweises auf die Patenterteilung : **09.01.85 Patentblatt 85/02**

(84) Benannte Vertragsstaaten :
**AT BE CH DE FR GB IT LI NL SE**

(56) Entgegenhaltungen :
**DE-A- 2 652 874**
**DE-A- 2 810 568**

(73) Patentinhaber : **KRUPP STAHL AKTIENGESELL-
SCHAFT**
**Postfach 1013 70**
**D-4630 Bochum 1 (DE)**

(72) Erfinder : **Kasper, Willi**
**Camillo-Sitte-Weg 13**
**D-4630 Bochum (DE)**
Erfinder : **Licht, Helmut, Ing.grad.**
**Liebigstrasse 1**
**D-4630 Bochum (DE)**
Erfinder : **Raquet, Erwin, Dr.rer.nat.**
**Am Rüsberg 15**
**D-5810 Witten (DE)**
Erfinder : **Schneider, Jürgen, Dr.Ing.**
**Surkenstrasse 49**
**D-4630 Bochum (DE)**

(74) Vertreter : **Patentanwaltsbüro Cohausz & Florack**
**Schumannstrasse 97**
**D-4000 Düsseldorf 1 (DE)**

## Beschreibung

Die Erfindung betrifft ein schwingungsgedämpftes Schienenrad mit einem oder mehreren schwingungsdämpfenden Elementen, insbesondere mit mehreren über den Radumfang verteilt am Radkranz bzw. an der Radfelge angeordneten, aus Masse und Dämpfungsmaterial bestehenden, auf die zu dämpfende(n) Eigenfrequenz(en) des Rades abgestimmten Resonanzabsorbern, die jeweils aus mehreren, insbesondere aus Platten gebildeten, parallel zueinander auf derselben Basis angeordneten und durch Zwischenlagen aus dem Dämpfungsmaterial voneinander getrennten Zungen bestehen.

Ein solches Schienenrad ist bekannt (DE-B-2 725 177). Bei diesem Schienenrad sind die Resonanzabsorber an einem Ring mit Schraubenbolzen befestigt, der seinerseits in einer Ausdrehung des Radkranzes eingeschrumpft ist. Eine solche Ankopplung der Resonanzabsorber an das Rad ist einerseits günstig, weil auf das Rad schwächende Bohrlöcher verzichtet wird, andererseits ist die Verwendung eingeschränkt auf nicht gebremste oder mittels Scheibenbremsen gebremste Räder. Bei klotzgebremsten Rädern wärmt sich der Radkörper auf und dehnt sich infolgedessen so weit aus, daß die Schrumpfverbindung des Ringes sich löst.

Der Erfindung liegt die Aufgabe zugrunde, bei einem schwingungsgedämpften Schienenrad der eingangs genannten Art eine Befestigung für die Resonanzabsorber vorzusehen, die sich bei klotzgebremsten Rädern einsetzen läßt.

Diese Aufgabe wird erfindungsgemäß dadurch gelöst, daß bei einem für Klotzbremsung ausgebildeten Rad in dem Radkranz bzw. der Radfelge mindestens eine radiale, innere, umlaufende, hinterschnittene Nut vorgesehen ist, wobei die Resonanzabsorber mit in diese Nut eingreifenden Schrauben bzw. Schraubenbolzen befestigbar sind.

Mit der in Umfangsrichtung umlaufenden Nut im Radkranz zur Befestigung der Resonanzabsorber wird den sich bei der Klotzbremsung im Radkranz aufbauenden Spannungen, die in Umfangsrichtung wesentlich größer als in radialer und axialer Richtung sind, voll Rechnung getragen. Da die höchsten Spannungˆn parallel zur Nut verlaufen, ergibt sich an den Übergangsradien im Grund der Nut nur ein Spannungskonzentrationsfaktor von etwa 1,2. Demgegenüber ergeben sich bei Bohrungen oder gar Gewindelöchern im Radkranz zur Befestigung von Absorbern Spannungskonzentrationsfaktoren von 2 bis 3. Dies beruht darauf, daß der Spannungsverlauf aus den Thermospannungen durch die Bohrungen oder Gewindelöcher in Umfangsrichtung geschnitten wird. Bei einer üblichen Dauerbremsung von etwa 20 Minuten bei einer Bremsleitung von 40 kW ergeben sich im Bereich der Nuten im Radkranz Thermospannungen von etwa 200 bis 300 N/mm² in Umfangsrichtung und von nur 20 bis 30 N/mm² in axialer und radialer Richtung.

Ein weiterer Vorteil der Erfindung besteht darin, daß bei der symmetrischen Ausbildung des Rades die umlaufende Nut die Möglichkeit bietet, die Resonanzabsorber an jeder gewünschten Umfangsstelle zu befestigen. Auf diese Art und Weise ist es möglich, die Resonanzabsorber nach dem Schwingungsmaximum auszurichten, aber auch so anzuordnen, daß Unwuchten ausgeglichen werden. Die Ankopplung bleibt auch bei Erwärmung aufrecht erhalten, so daß die Dämpfungswirkung bleibt.

Nach einer Ausgestaltung der Erfindung ist es günstig, die Nut an der Spurkranzseite anzuordnen, da hier noch geringere Spannungskonzentrationsfaktoren und eine geringere Wärmebelastung auftreten.

Für die Befestigung in der hinterschnittenen Nut bieten sich verschiedene Möglichkeiten. So können die Schrauben bzw. Schraubenbolzen zum Hintergreifen der Nut Hammerköpfe oder Senkköpfe tragen. Es ist auch möglich, daß die Schrauben bzw. Schraubenbolzen in der Nut befindliche, einteilige oder spreizbare Keilstücke eingeschraubt sind. Im Falle von Hammerköpfen können diese durch Verdrehen in die Nut eingefädelt werden, während im Falle von Senkköpfen die Nut mindestens an einer Stelle derart erweitert ist, daß die Köpfe in die Nut eingesteckt werden können.

Um die Resonanzabsorber, insbesondere das Dämpfungsmaterial, vor der Bremswärme zu schützen, kann zwischen der Basis des Resonanzabsorbers und der Anlagefläche am Rad eine Wärmesperre, insbesondere in Form von Rippen oder als Sockel, vorgesehen sein.

Im folgenden wird die Erfindung anhand einer zwei Ausführungsbeispiele darstellenden Zeichnung näher erläutert. Im einzelnen zeigen

Figur 1 ein Schienenrad im Bereich des Radkranzes mit in radialer Richtung wirksamen Resonanzabsorbern im Radialschnitt,

Figur 2 einen Ausschnitt des Schienenrades gemäß Fig. 1 aus der Sicht des Pfeiles A der Fig. 1,

Figur 3 einen Ausschnitt des Schienenrades gemäß Fig. 1 im Radialschnitt an einer zu Fig. 1 in Umfangsrichtung versetzten Stelle,

Figur 4 einen Resonanzabsorber für ein Schienenrad gemäß Fig. 1 in Seitenansicht,

Figur 5 ein Schienenrad im Bereich des Radkranzes mit axial wirksamen Resonanzabsorbern im Radialschnitt und

Figur 6 einen Ausschnitt des Schienenrades gemäß Fig. 5 in Seitenansicht.

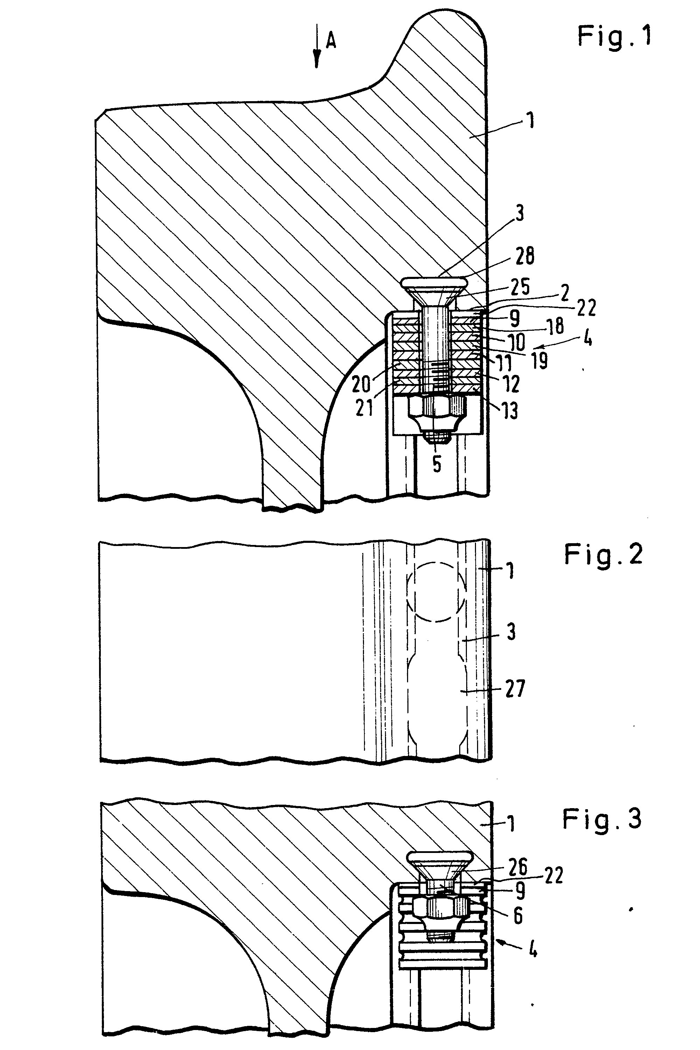

Beim Ausführungsbeispiel der Fig. 1 bis 3 ist auf der inneren Spurkranzseite des Radkranzes 1 eine Anlageflächen bildende Ausdrehung 2 mit einer umlaufenden, hinterschnittenen V-förmigen Nut 3 vorgesehen. Resonanzabsorber 4 sind jeweils mittels dreier Schraubenbolzen 5, 6, die mit Hammerköpfen 25, 26 in die hinterschnittene Nut 3 eingreifen, am Radkranz 1 befestigt. Dabei stützen sich die Resonanzabsorber 4 mit ihrer als Grundplatte 9 ausgebildeten Basis an der Anlagefläche 2 des Radkranzes 1 ab.

Die Resonanzabsorber 4 bestehen jeweils aus der erwähnten Grundplatte 9 und mehreren plattenförmigen Zungen 10, 11, 12, 13, die voneinander durch Zwischenlagen 14, 15, 16, 17 aus Dämpfungsmaterial getrennt sind. Im mittleren Bereich sind die Grundplatte 9 und die Zungen 10, 11, 12, 13 zusammen mit Distanzplatten 18, 19, 20, 21 durch Schweißung oder Vernietung starr miteinander verbunden. Die Grundplatte 9 trägt an der Anlageseite verteilt angeordnete Rippen 22, die zum einen für eine gute Ankopplung an den Radkranz 1 sorgen, zum anderen als Wärmesperre wirken.

Im mittleren Bereich des Resonanzabsorbers 4 ist eine durchgehende Bohrung 23 für den Schraubenbolzen 5 und an den überstehenden Enden der Grundplatte 9 sind halbrunde Bohrungen 24 vorgesehen, in die die Schraubenbolzen 6 eingreifen.

Jeder Resonanzabsorber 4 wird in der Weise am Radkranz 1 befestigt, daß zunächst der Schraubenbolzen 5 z. B. mit seinem Hammerkopf 25 durch Verdrehen um 90° in die Nut 3 eingeführt wird. Sofern statt des Hammerkopfes 25 des Schraubenbolzens 5 ein runder Kopf vorgesehen ist, kann an einer Stelle der Nut 3 eine entsprechende Erweiterung 27 vorgesehen sein, um den Kopf einzufädeln. Dann wird der Resonanzabsorber 4 an die vorgesehene Umfangsstelle geschoben und mit dem Schraubenbolzen 5 und den äußeren Schraubenbolzen 6, die ebenfalls Hammerköpfe 26 aufweisen, in der Nut 3 befestigt und gegen die Anlagefläche 2 verspannt.

Im Grund der V-förmigen Nut 3 kommt es bei der Klotzerwärmung nicht zu übermäßig hohen Spannungen. Selbst an den abgerundeten Stellen 28, wo die relativ höchsten Spannungen auftreten, ergibt sich nur ein Spannungskonzentrationsfaktor von 1,2.

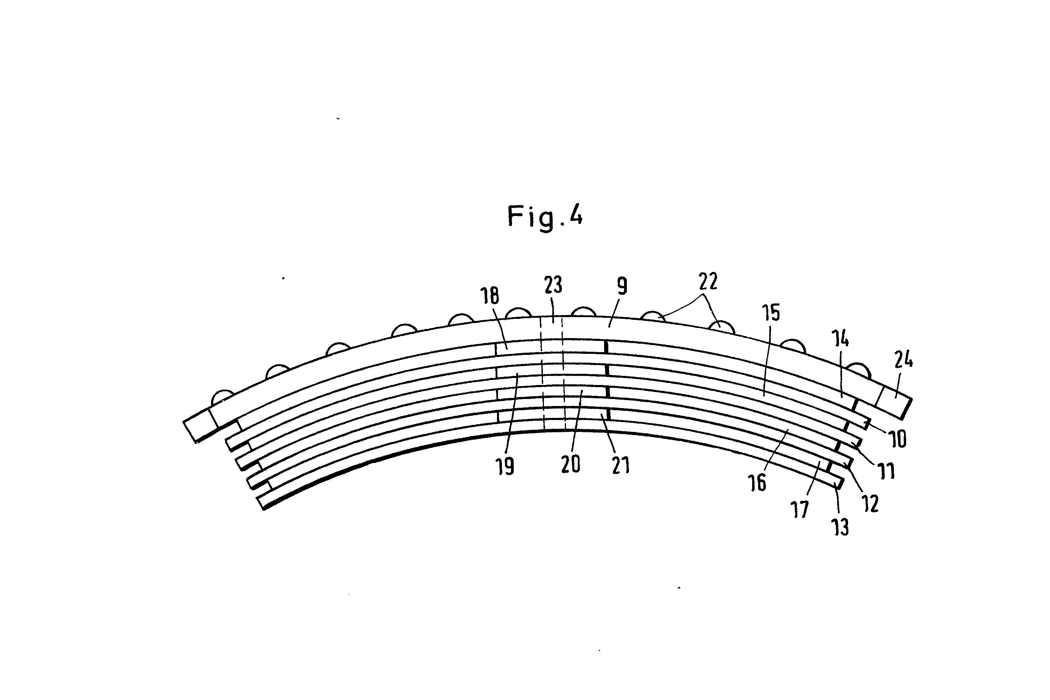

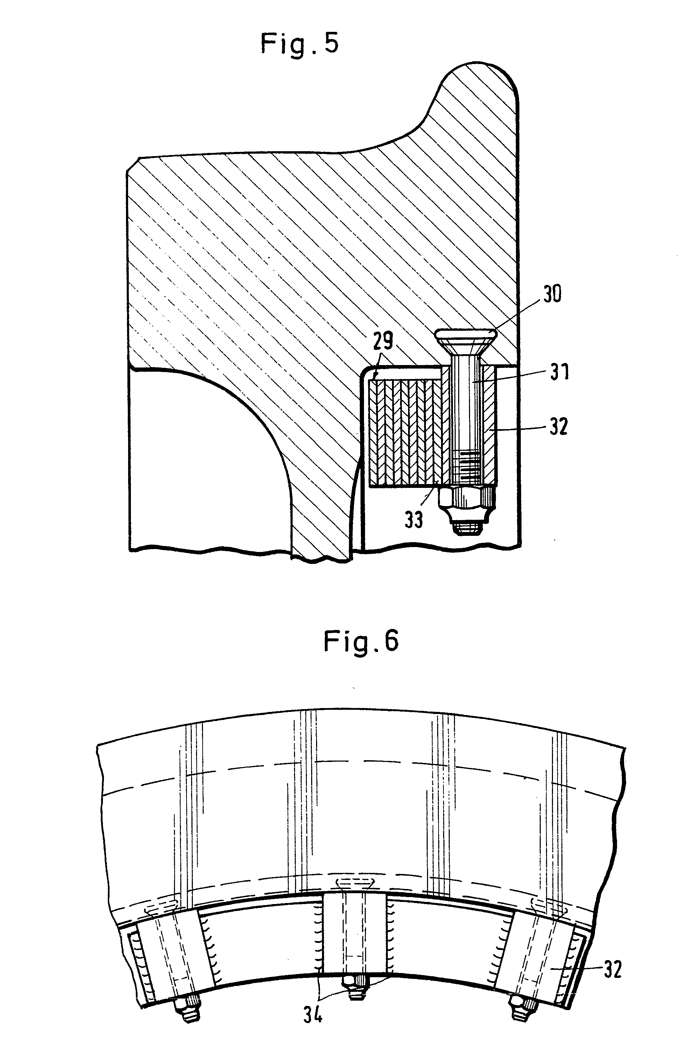

Während das Ausführungsbeispiel der Fig. 1 bis 4 für die Schwingungsdämpfung radialer Schwingungen bestimmt ist, dient das Ausführungsbeispiel der Fig. 5 und 6 zur Dämpfung axialer Schwingungen. Der Unterschied zwischen beiden Ausführungsbeispielen besteht in der Orientierung der Zungen der Resonanzabsorber 4, 29. Die andere Orientierung der Resonanzabsorber macht es allerdings erforderlich, daß auch die Ankopplung am Radkranz etwas anders ist. Zwar ist wie beim Ausführungsbeispiel der Fig. 1 bis 4 eine V-förmige Nut 30 vorgesehen, in der die Resonanzabsorber 29 mittels Schrauben 31 befestigt sind, doch sind zusätzlich drei Blöcke 32 vorgesehen, an denen die Grundplatte 33 an den Stellen 34 angeschweißt ist. Die Blöcke 32 sind derart gestaltet, daß die Resonanzabsorber 29 Spiel gegenüber dem Radkranz haben. Der gegenüber dem Resonanzabsorber 29 überstehende Bereich der Blöcke 32 entspricht in seiner Funktion deshalb den Rippen 22 beim Ausführungsbeispiel der Fig. 4.

## Ansprüche

1. Schwingungsgedämpftes Schienenrad mit einem oder mehreren schwingungsdämpfenden Elementen (10-17), insbesondere mit mehreren über den Umfang verteilt am Radkranz (1) bzw. an der Radfelge angeordneten, aus Masse und Dämpfungsmaterial bestehenden, auf die zu dämpfende(n) Eigenfrequenz(en) des Rades abgestimmten Resonanzabsorbern (4, 29) die jeweils aus mehreren, insbesondere aus Platten gebildeten, parallel zueinander auf derselben Basis (9) angeordneten und durch Zwischenlagen (14, 15, 16, 17) aus dem Dämpfungsmaterial voneinander getrennten Zungen (10, 11, 12, 13) bestehen, dadurch gekennzeichnet, daß bei einem für Klotzbremsung ausgebildeten Rad in dem Radkranz (1) bzw. der Radfelge mindestens eine radiale, innere, umlaufende, hinterschnittene Nut (3, 30) vorgesehen ist, wobei die Resonanzabsorber (4, 29) mit in diese Nut (3, 30) eingreifenden Schrauben (5, 6, 31) bzw. Schraubenbolzen (5, 31) befestigbar sind.

2. Schwingungsgedämpftes Schienenrad nach Anspruch 1, dadurch gekennzeichnet, daß die Nut (3, 30) an der Spurkranzseite angeordnet ist.

3. Schwingungsgedämpftes Schienenrad nach Anspruch 1 oder 2, dadurch gekennzeichnet, daß die Schrauben (5, 6, 31) zum Hintergreifen der Nut (3) Hammerköpfe (25, 26) oder Senkköpfe tragen.

4. Schwingungsgedämpftes Schienenrad nach Anspruch 1 oder 2, dadurch gekennzeichnet, daß die Schrauben (25, 26) bzw. Schraubenbolzen in in der Nut (3, 30) befindliche, einteilige oder spreizbare Keilstücke eingeschraubt sind.

5. Schwingungsgedämpftes Schienenrad nach Anspruch 3 oder 4, dadurch gekennzeichnet, daß die Nut (3, 30) an einer oder mehreren Stellen Einführungsöffnungen (27) für die Hammerköpfe (25, 26), Senkköpfe oder Keile aufweist.

6. Schwingungsgedämpftes Schienenrad nach einem der Ansprüche 1 bis 5, dadurch gekennzeichnet, daß zwischen der Basis (9) der Resonanzabsorber (4, 29) und der Anlagefläche (2) am Radkranz (1) eine Wärmesperre, insbesondere in Form von Rippen (22) oder als Sockel eines Blockes (32) vorgesehen ist.

## Claims

1. A vibration-damped track wheel having one or more vibration-damping elements (10-17), in particular having a plurality of resonance absorbers (4, 29) which are arranged distributed over the periphery on the wheel flange (1) or on the wheel rim, consist of mass and damping material, are tuned to the characteristic frequency(ies) of the wheel to be damped, and which comprise in each case a plurality of tongues (10, 11, 12, 13), which are formed in particular by plates, are arranged parallel to one another on the same base (9) and are separated from one another by intermediate layers (14, 15, 16, 17) of the damping material, characterized in that in the case of a wheel designed for block braking at least one radial, inner, continuous undercut groove (3, 30) is provided in the wheel flange (1) or the wheel rim, it being possible to secure the resonance absorber (4, 29) by screws (5, 6, 31) or screw bolts (5, 31) engaging in the said groove (3, 30).

2. A vibration-damped track wheel according to Claim 1, characterized in that the groove (3, 30) is formed on the wheel flange side.

3. A vibration-damped track wheel according to Claim 1 or 2, characterized in that the screws (5, 6, 31) for engaging behind the groove (3) have hammer heads (25, 26) or flat heads.

4. A vibration-damped track wheel according to Claim 1 or 2, characterized in that the screws (25, 26) or screw bolts are screwed into solid or expandable wedge-shaped members disposed in the groove (3, 30).

5. A vibration-damped track wheel according to any one of Claims 3 and 4, characterized in that at one or more places the groove (3, 30) has insertion openings (27) for the hammer heads (25, 26), flat heads or wedges.

6. A vibration-damped track wheel according to any one of Claims 1 to 5, characterized in that a thermal barrier, in particular in the form of ribs (22) or the base of a block (32), is provided between the base (9) of the resonance absorbers (4, 29) and the bearing surface (2) on the wheel flange (1).

**Revendications**

1. Roue pour rail avec amortissement de vibrations comprenant un ou plusieurs éléments (10, 17) avec amortissement de vibrations, en particulier plusieurs absorbeurs de résonance (4, 29) répartis sur la périphérie sur le rebord de roue (1) ou sur la jante, constitués de masses et de matériau amortisseur, accordés à la fréquence ou aux fréquences propres de la roue à amortir, qui sont chacun constitués de plusieurs languettes (10, 11, 12, 13), en particulier formées par des plaques, disposées parallèles les unes aux autres sur la même base (9) et séparées les unes des autres par des lames intermédiaires (14, 15, 16, 17) dans le matériau amortisseur, caractérisée par le fait que, pour une roue construite pour le freinage à sabot, au moins une rainure (3, 30) radiale, intérieure, faisant le tour et en contre-dépouille est prévue dans le rebord de roue (1) ou la jante, les absorbeurs de résonance (4, 29) pouvant être fixés par des vis (5, 6, 31) ou des boulons (5, 31) en prise dans cette rainure (3, 30).

2. Roue pour rail avec amortissement des vibrations selon la revendication 1, caractérisée par le fait que la rainure (3, 30) est disposée sur la face du boudin.

3. Roue pour rail avec amortissement des vibrations selon l'une des revendications 1 et 2, caractérisée par le fait que les vis (5, 6, 31) portent, pour la prise postérieure de la rainure (3), des têtes rectangulaires avec angles rabattus (25, 26) ou des têtes fraisées.

4. Roue pour rail avec amortissement des vibrations selon l'une des revendications 1 et 2, caractérisée par le fait que les vis (25, 26) ou boulons sont vissés dans des pièces en coin d'une seule pièce ou à expansion se trouvant dans la rainure (3, 30).

5. Roue pour rail avec amortissement des vibrations selon l'une des revendications 3 et 4, caractérisée par le fait que la rainure (3, 30) présente à un ou plusieurs emplacements des ouvertures d'entrées (27) pour les têtes rectangulaires avec angles rabattus (25, 26), les têtes fraisées ou les coins.

6. Roue pour rail avec amortissement des vibrations selon l'une des revendications 1 à 5, caractérisée par le fait qu'un arrêt de chaleur est prévu entre la base (9) de l'absorbeur de résonance (4, 29) et la surface d'appui (2) sur le rebord de roue (1), en particulier sous forme de nervures (22) ou d'un socle d'un bloc (32).

Fig.1

A

1

3
28
25
2
22
9
18
10
4
11
19
20
12
21
13

5

Fig.2

1

3

27

Fig.3

1

26
22
9
6
4

Fig.4

Fig. 5

Fig. 6